# EUROPEAN PATENT SPECIFICATION

(11) **EP 2 975 732 B1**
(45) Date of publication and mention of the grant of the patent: **21.11.2018**
(21) Application number: 15167041.1
(22) Date of filing: 08.05.2015
(51) Int. Cl.: H02K 15/04, H02K 3/14, H01F 41/07

(54) **STRAND LAYOUT FOR REDUCED AC WINDING LOSS**
STRANGLAYOUT FÜR REDUZIERTEN WECHSELSTROMWICKLUNGSVERLUST
DISPOSITION DE BRIN PERMETTANT DE RÉDUIRE LA PERTE D'ENROULEMENT CA

(30) Priority: 08.07.2014 US 201414325866
(43) Date of publication of application: 20.01.2016
(73) Proprietor: Hamilton Sundstrand Corporation, Charlotte, NC 28217 (US)
(72) Inventor: TANGUDU, Jagadeessh, South Windsor, CT 06074 (US); VERONESI, William A., Hartford, CT 06114 (US); JAGDAL, Vijay, Manchester, CT 06042 (US); LYNCH, Matthew E., Canor, CT 06109 (US); KUCZEK, Andrzej Ernest, Bristol, CT 06010 (US); EL-WARDANY, Tahany Ibrahim, Bloomfield, CT 06002 (US); SCHMIDT, Wayde R., Pomfret Center, CT 06259 (US); FRAME, Dustin, Edmonds, WA 98020 (US); HOLOWCZAK, John E., South Windsor, CT 06108 (US)
(74) Representative: Dehns

(56) References cited:
- DE-B- 1 017 264
- JP-A- 2009 199 749
- US-A- 2 896 102

## Description

### BACKGROUND OF THE INVENTION

Exemplary embodiments pertain to the art of devices using magnetic field generation.

Magnetic field generation is part of many systems. For example, various systems include a rotor rotating within a stationary stator to interact with or produce a rotating magnetic field. Exemplary ones of these electromagnetic devices or systems include electric machines (motors, generators, brakes, actuators), transformers, electromagnetic coils, and inductors. The stator comprises windings, which often comprise smaller strands. The use of small strands is intended to reduce the impact of skin and proximity effects that together effectively limit current to only a portion of a conductor carrying alternating current in the presence of external magnetic fields. These combined detrimental effects lead to what is commonly referred to as AC winding losses. Having many strands, each of which has relatively small cross-sectional area, and appropriately twisting these strands, maximizes the effective current-carrying cross section and reduces localized current density for a given total winding current and effectively reduces the AC winding losses and thereby increases machine efficiency. Document JP-2009 199749 discloses a strand layout of the prior art having strands with a changing cross-sectional shape.

### BRIEF DESCRIPTION OF THE INVENTION

Disclosed is a component to generate a magnetic field including a plurality of slots; and sets of a plurality of strands that form windings, each set of the plurality of strands being enclosed in a respective one of the plurality of slots, each set of the plurality of strands being divided into a plurality of a collection of strands configured to be twisted over a portion of a length of the respective one of the plurality of slots, wherein each of the collection of strands is configured to change cross sectional shape over the portion.

Also disclosed is a method of designing strand layout of windings, comprised of a plurality of strands, within each slot of a component configured to generate a magnetic field. The method includes twisting two or more of the plurality of strands over a portion of a length of the respective slot; and changing a cross sectional shape of the two or more of the plurality of strands over the portion of the length.

### BRIEF DESCRIPTION OF THE DRAWINGS

The following descriptions should not be considered limiting in any way. With reference to the accompanying drawings, like elements are numbered alike:
FIG. 1 illustrates the stator 110 and rotor 120 of an electric motor;
FIG. 2 illustrates strands according to one embodiment of the invention;
FIG. 3 illustrates strand layout according to one embodiment of the invention;
FIG. 4 illustrates strand layout according to another embodiment of the invention;
FIG. 5 illustrates strand layout according to another embodiment of the invention;
FIG. 6 illustrates strand layout according to another embodiment of the invention;
FIG. 7 illustrates strand layout according to another embodiment of the invention;
FIG. 8 illustrates strand layout according to another embodiment of the invention;
FIG. 9 illustrates an exemplary strand layout along a stator slot according to embodiments of the invention; and
FIG. 10 is a process flow of a method of designing strand layout of a stator.

### DETAILED DESCRIPTION OF THE INVENTION

A detailed description of one or more embodiments of the disclosed apparatus and method are presented herein by way of exemplification and not limitation with reference to the Figures.

At noted above, an electric machine or other electromagnetic device includes a stator with windings of strands. The windings may be comprised of copper or other conducting material (e.g., aluminum, copper clad aluminum) wound around a core, in the case of electrical machines with a core, or in a support structure, in the case of a coreless machine). Each group of strands forming a winding passes through a slot, which may be supported by the core for mechanical support, for example. The performance of an electric machine is based in large part on the total current through the windings and the magnetic reluctance of the flux path through stator and rotor. The reluctance is driven by path length and cross section and can be reduced by increasing the current density. Increased current density requires an increased conductor fill factor within the slot. Slot fill factor is maximized when all of the space in a slot is filled either with useful thickness of conductor or the minimum amount of insulator needed to isolate adjacent windings. Another consideration is higher efficiency of the electric machine, which requires lower copper and core losses. Copper losses include direct current (DC) copper losses which are proportional to a square of the current and resistance, and alternating current (AC) copper losses produced due to skin and proximity effects. The AC copper losses can reach magnitudes that are 8 to 10 times or even higher (depending on the excitation frequency and strand cross sectional area and other associated factors) the magnitude of DC copper losses. In order to achieve reduced AC winding copper losses, several insulated copper strands are twisted together about an axis.

Embodiments of the systems and methods described herein relate to increased fill factor within each slot (increased current density) as well as increased control over twisting of the strands in order to reduce AC winding copper loss. Specifically, the embodiments relate to changing the cross sectional shape of the individual strands during a twist such that an overall (polygonal) shape for a given set of strands can be maintained and the polygonal shapes may be selected to fill the slot space. This ability to change the cross sectional shape of the strands is facilitated by one of several different techniques according to several embodiments. Several types of additive manufacturing technologies (e.g., powder deposition, powder bed fusion) may be used, for example. As another example, casting may also be used to cast the cross sectional shapes on each side of a twist. According to an extrusion technique, each portion of a strand with a uniform cross sectional shape (e.g., circular) on each side of a twist may be pushed through a different mold to reshape it. According to a molding or cold working technique, each portion of a strand with a uniform cross sectional shape on each side of a twist may have a mold shaped around it to reshape it differently. The embodiments described below are not limited to any particular technique for shaping the cross sectional shape of the strand.

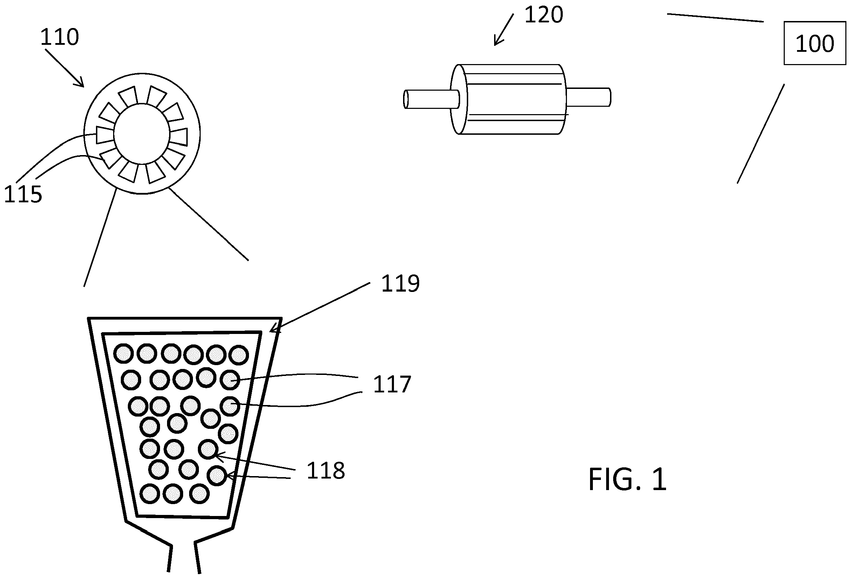

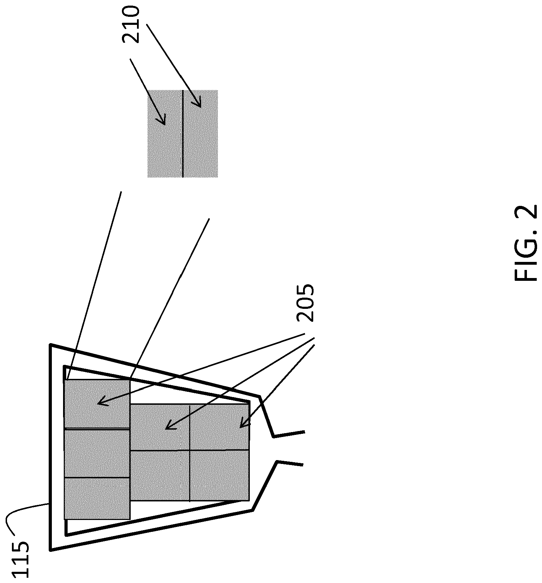

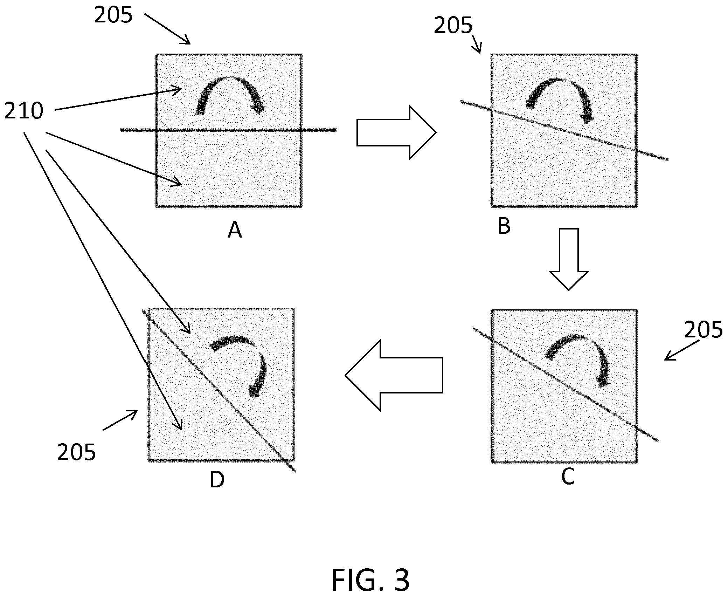

FIG. 1 depicts the stator 110 and rotor 120 of an electric machine 100. As noted above, the electric machine 100 is an electromagnetic device such as, for example, an electric motor, a generator, brake, or an actuator. While a stator 110 and rotor 120 are specifically illustrated and discussed, the strand layout embodiments discussed herein relate, as well, to other components that generate a magnetic field. The stator 110 includes slots 115 that run along the length of the electric machine 100 and support windings of conductor material that are formed from strands 117. The slots 115 traverse the length of the electric machine 100 and follow a path that may or may not be straight according to various embodiments. For example, the slots 115 may be skewed to achieve lower torque ripple. The slots 115 may follow helical paths. The stator 110 and rotor 120 may be conical sections. The approach also applies to radial slot designs. The embodiments discussed below are not limited based on an alignment of the slot 115 with the stator 110. A cross section of the stator 110 is shown in FIG. 1. The strands 117 whose cross section is shown in FIG. 1 have a circular cross sectional shape that does not change over the length of the strand 117. That is, regardless of where along the strand 117 the cross section was taken, the shape would look like the strand 117 cross sectional shape shown in FIG. 1. Each slot 115 includes slot insulation 119 and each strand may be surrounded by conductor insulation 118. The slot 115 may have a different cross sectional shape than the exemplary one shown in FIG. 1. A group of strands 117 (e.g., five strands 117) within the slot 115 is twisted together to reduce AC winding loss. As noted, the cross sectional shape of the conventional strands 117 does not change such that the shape before the twist is substantially the same (barring slight deformation due to the twisting) after the twist. As a result, as FIG. 1 illustrates, even if the strands 117 were packed in more tightly, free space is needed within the slot 115 to accommodate the strands 117 and the twist. The embodiments detailed below relate to strands 210 (FIG. 2) whose cross sectional shape changes, as needed, such that a group of strands 210 that is twisted together occupy the same space within the slot 115 before and after the twist. As detailed below, this facilitates a high fill factor within the slot 115. While the discussion below of the exemplary embodiments shown in FIGs. 3-8 relates to a specific degree of twist of the strands 117, the embodiments are not limited to any particular value. That is, for example, the twist of the strands 117 shown and discussed below for FIG. 3 is 45 degrees but could be any other value. The degree of twist may be based on design requirements or the impact of the twist on AC winding losses.

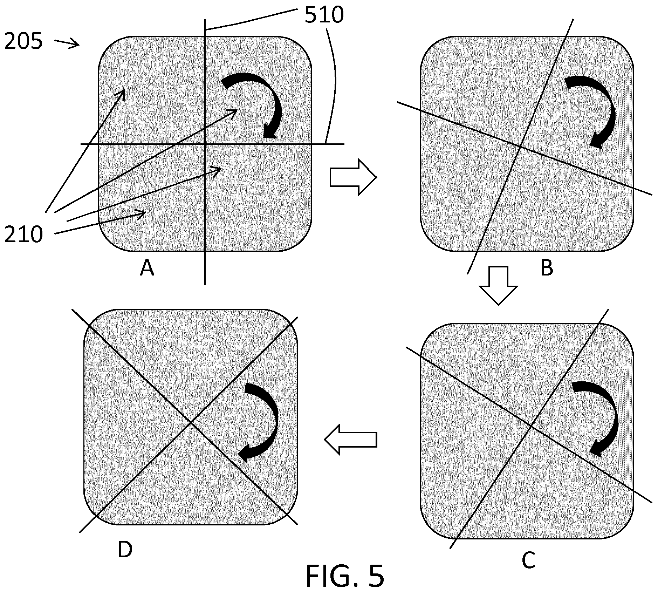

FIG. 2 illustrates strands 210 according to one embodiment of the invention. A slot 115 is shown with collections 205 of strands 210 that are twisted together. A grouping of strands 210 that is twisted together (a coil) is referred to herein as a collection 205 for explanatory purposes. In the embodiment shown in FIG. 2, each collection 205 includes two strands 210, and the polygon formed by each collection 205 is a rectangle. Each of the collection 205 of strands 210 may be identical or, in alternate embodiments, could have a different size and shape for the polygon formed by each collection 205 and the number of strands 210 in each collection 205. The polygon shape is not limited to a rectangle but could instead be another shape (e.g., triangle, hexagon) and could have rounded corners (see e.g., FIG. 5) or rounded faces. As a result, it should be clear that a polygon size and shape for each collection 205 of strands 210 could be chosen to fill the slot 115 with little or no gaps. This is facilitated because the polygon size and shape of the collection 205 may be maintained even as the strands 210 that make up the collection 205 are twisted, based on the fact that each strand 210 may change cross sectional shape. This is illustrated with reference to FIGs. 3-8 below.

FIG. 3 illustrates strand layout according to one embodiment of the invention. The strand layout or winding design refers to the formation and arrangement of the strands 210 that make up the windings. The exemplary collection 205 of two strands 210 shown in FIG. 2 is used to illustrate a twist. Four cross sectional images (A, B, C, D) of the same collection 205 of the two strands 210 are shown at four places along the length of the strands 210. The four different images A, B, C, D show the cross sectional shape of the strands 210 during a twist. That is, a twist of some number of strands 210 involves or occurs over a portion of those strands 210 rather than at one particular point, and the images A, B, C, D show the cross sectional shape of the strands 210 within that portion. Initially, as shown in image A, the cross sectional shape of the two strands 210 is rectangular. As indicated by image B, the cross sectional shape of the collection 205 (polygon formed by or enclosing the two strands 210) at a subsequent place along the length of the strands 210 is the same but the cross sectional shape of each of the strands 210 is now non-rectangular. In image C, the same is true. The collection 205 has the same cross sectional shape but the two strands 210 have a different cross sectional shape than at the other place along the strands 210 shown in image B. In image D, taken at a spot along the strands 210 after the twist (at a place where the strands 210 are twisted or displaced 45 degrees from their original orientation shown in image A), the same is true again. The cross sectional shape of the strands 210 has changed yet again but the cross sectional shape of the polygon representing the collection 205 of the strands 210 is unchanged.

In the embodiment shown in FIG. 3, the area of the cross section of each of the two strands 210 remains the same at each of the places along the strands 210 (shown in images A, B, C, and D) even though the cross sectional shape changes at each of those places. As noted above, the twist is used to reduce AC winding losses. Based on using one of the several exemplary manufacturing techniques noted above or other techniques, the strands 210 may be fabricated, as shown in images A, B, C, D, such that the degree of twist is strictly controlled while maintaining the cross sectional shape of the polygon enclosing the collection 205. Consequently, a high fill factor can be maintained in the slot 115.

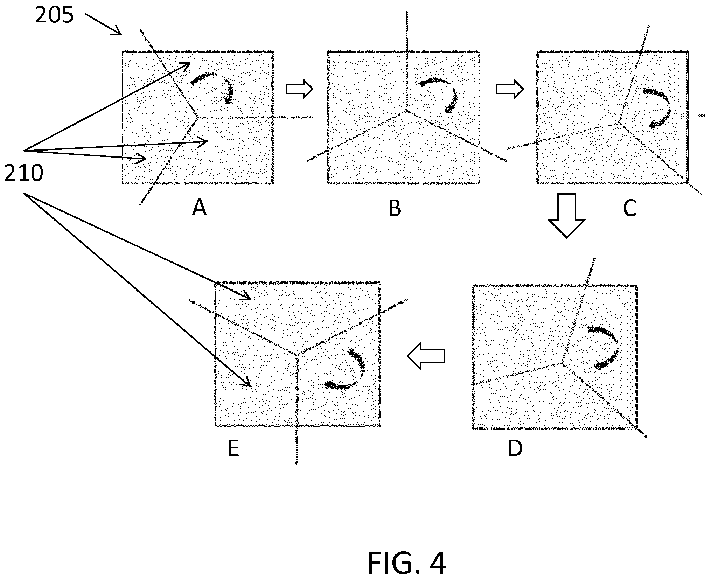

FIG. 4 illustrates strand layout according to another embodiment of the invention. In the embodiment shown in FIG. 4, each collection 205 includes three strands 210. Each of the cross sectional images A, B, C, D, E shows that the size and shape of the polygon formed by the collection 205 of strands 210 remains unchanged over the five different points along the length of the strands 210 shown by the five cross sectional images A, B, C, D, E. However, the cross sectional shape of each of the strands 210 in the collection 205 changes among the images A, B, C, D, E. Thus, the slot 115 could be filled up with collections 205 of the three strands 210 and the cross sectional size and shape of each collection 205 would remain unchanged over the length of a twist made to reduce AC winding losses. The total twist shown by the images A, B, C, D, E is a 90 degree twist.

FIG. 5 illustrates strand layout according to another embodiment of the invention. In the embodiment shown in FIG. 5, each collection 205 includes four strands 210. Like FIGs. 3 and 4, FIG. 5 shows different cross sectional images A, B, C, D corresponding with different points along the length of the strands 210. The different points correspond with an area of the strands 210 undergoing a twist to reduce AC winding losses. The polygonal cross sectional shape of the collection 205 includes rounded corners according to the exemplary embodiment shown in FIG. 5. As noted above, the cross sectional shape of the collection 205 may be any polygon (e.g., rectangle, triangle, hexagon) with straight or rounded corners and straight or rounded faces. In addition, while the lines 510 delineating the strands 210 are shown as straight lines in FIGs. 3-8, the lines 510 may be curved lines in alternate embodiments. Whether straight or curved, the lines 510 are positioned to ensure that the cross sectional area of each strand 210 within the collection 205 is the same according to one embodiment. According to alternate embodiments, the cross sectional areas of the strands 210 may be different or may be maintained within a defined range. A defined range for the cross sectional areas of the strands 210 (with regard to the current embodiment and other embodiments discussed below) may be determined based on, for example, current density, localized heat loads, capacity for heat removal, temperatures of the materials involved, and ambient conditions.

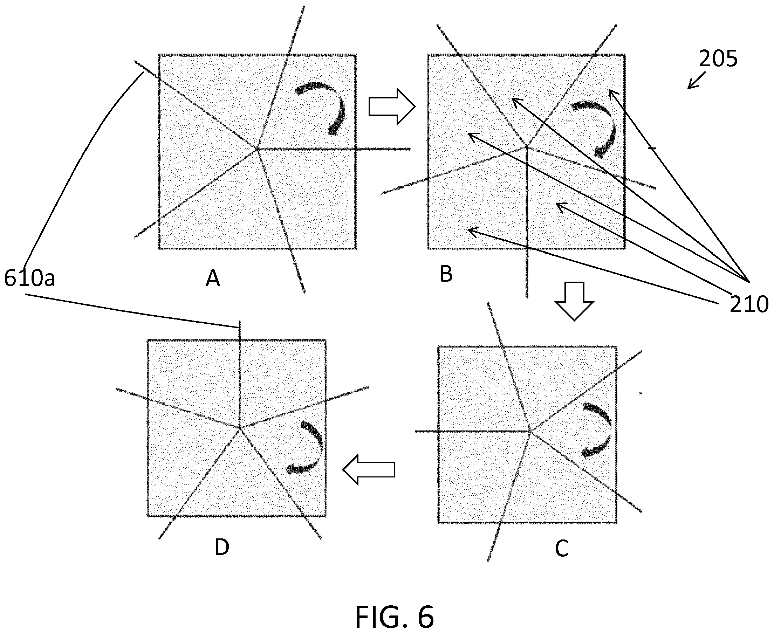

FIG. 6 illustrates strand layout according to another embodiment of the invention. In the embodiment shown in FIG. 6, each collection 205 includes five strands 210. Like FIGs. 3, 4, and 5, FIG. 6 shows different cross sectional images A, B, C, D corresponding with different points along the length of the strands 210. The different points correspond with an area of the strands 210 undergoing a twist to reduce AC winding losses. As the position of line 610a in image A versus in image D indicates, the strands 210 shown in FIG. 6 undergo a twist of greater than 45 degrees but less than 90 degrees. The twist can be precisely controlled based on the formation of the strands 210.

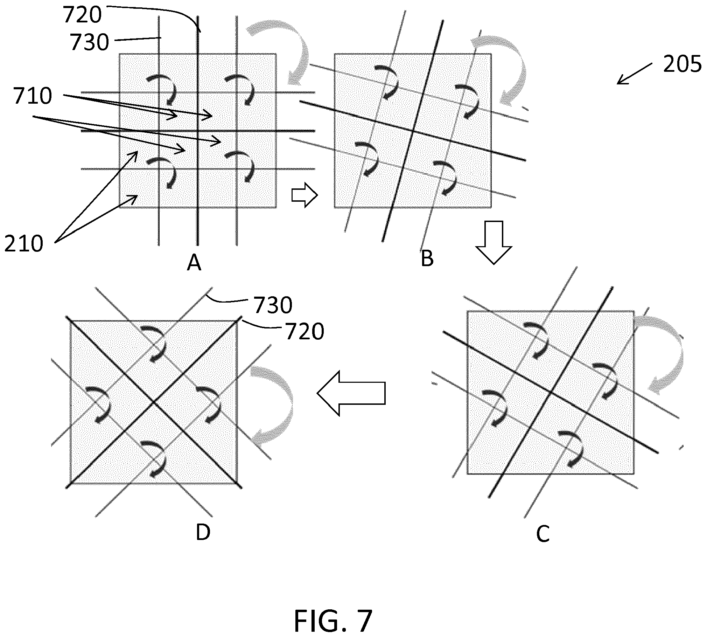

FIG. 7 illustrates strand layout according to another embodiment of the invention. In the embodiment shown in FIG. 7, each collection 205 includes sixteen strands 210. The collection 205 can be thought of as four sub-collections 710, each including four strands 210. The line 720 is one of the two lines delineating the four sub-collections 710, and the line 730 is one of the lines delineating strands 210 within the four sub-collections 710. A twist may be done of sets of four strands 210 within a sub-collection 710, of all sixteen strands 210 of the collection 205, or both. FIG. 7 illustrates a twist of all sixteen strands 210 together in cross sectional images A, B, C, D. That is, the positions of lines 720 and 730 in image A compared to the positions of lines 720 and 730 in image D indicate that the lines have not moved relative to each other (no twist of the sub-collection 710 within the collection 205). Instead, the entire arrangement has twisted 45 degrees. The arrangement shown in FIG. 7 maintains the lines 720 and 730 to illustrate the relative movement of the strands 210. However, in reality, the lines 720 and 730 may be curved or the center of the arrangement may be moved to maintain the cross sectional area of each of the strands 210 to be constant or within a defined range, for example. The twist-within-a-twist configuration is possible for other sub-collections 710 of strands 210, as well. Any non-prime number of strands 210 may be subdivided into sub-collections 710 of a collection 205. For example, a collection 205 may include nine strands subdivided into set sub-collections 710 of three strands 210 each. As another example, twelve strands in a collection 205 may be subdivided into four sub-collections 710 of three strands 210 each or into three sub-collections 710 of four strands 210 each. When the strands 210 of the sub-collections 710 are further twisted relative to the collection 205, the additional twist may further reduce AC winding losses. A caveat with regard to performing a twist of strands 210 to reduce AC winding losses is that increasing an effective length of the strands based on a large degree of twist can have the effect of increasing DC winding loss. Thus, the two considerations (AC winding loss and DC winding loss) must be balanced.

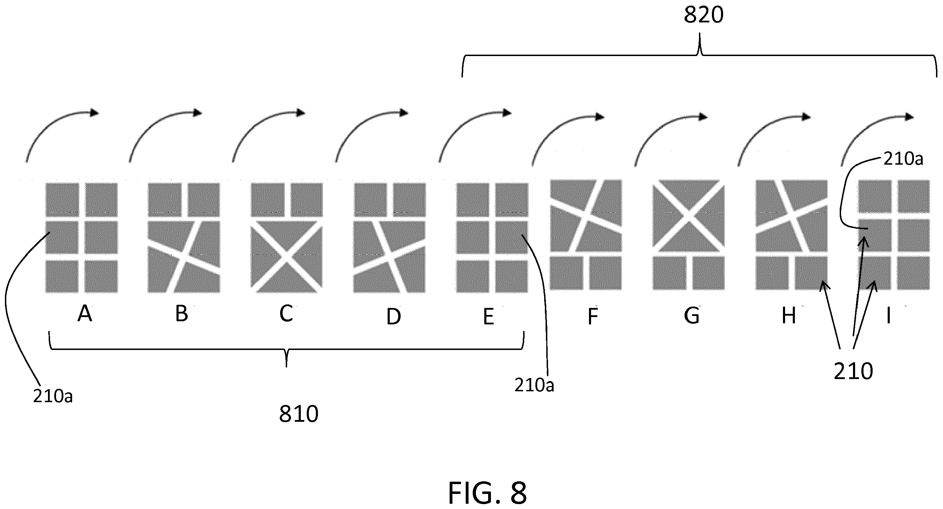

FIG. 8 illustrates strand layout according to another embodiment of the invention. A cross section of six strands 210 is shown at nine different positions along the length of the strands 210 in nine images A through I. FIG. 8 illustrates an interchanging of windings. That is, in a first twist, shown in images A through E, four (bottom) strands 210 are twisted by 90 degrees. In a second twist, shown in images E through I, four (top) strands 210 are twisted by 90 degrees also. Thus, strand 210a twists 90 degrees, along with three other (bottom) strands 210, from the position shown in image A to the position shown in image E according to the first twist. Then, strand 210a twists another 90 degrees, along with three other (top) strands 210, from the position shown in image E to the position shown in image I according to the second twist. In this case, strand 210a returns to its original position (shown in image A), relative to the other strands 210 shown in FIG. 8. While FIG. 8 illustrates an exemplary embodiment, the interchanging shown by FIG. 8 is not limited by the example. A different number of strands 210 may be twisted together or a different degree of twist may be implemented in alternate embodiments.

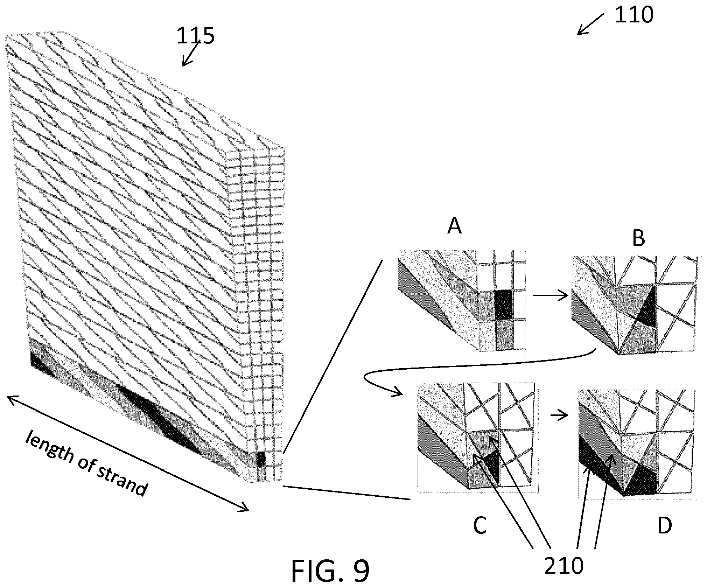

FIG. 9 illustrates an exemplary strand layout along a stator 110 slot 115 according to embodiments of the invention. Four different cross sectional images A, B, C, D of four strands 210 that are twisted are shown in FIG. 9. As FIG. 9 illustrates, the cross sectional area of the strands 210 does not change even though the cross sectional shape of the strands 210 certainly changes from one image A, B, C, D to the next. In an alternate embodiment, the cross sectional area of the strands 210 may change within a defined range. As noted above and illustrated in FIGs. 3, 4, and 6-8, fewer or more than four strands 210 may be twisted.

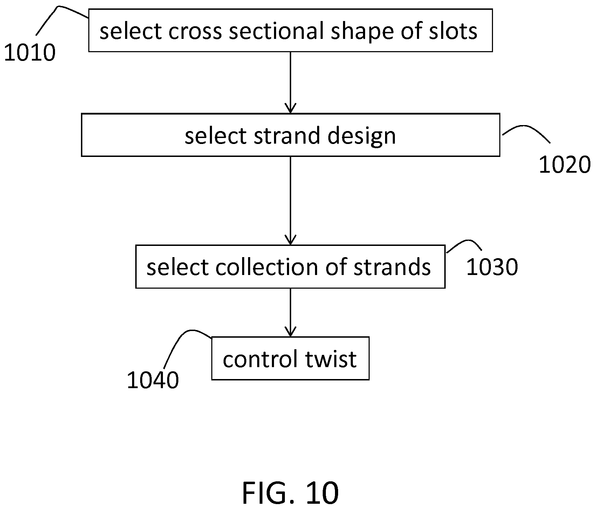

FIG. 10 is a process flow of a method of designing strand layout of a stator 110. At block 1010, selecting a cross sectional shape of the slots 115 of the stator 110 is not limited to any particular shape. At block 1020, selecting a strand 210 design includes selecting a size, shape, and number of strands 210 by considering the skin effect. Minimizing or eliminating gaps in the slot 115 is another consideration, as well as conductor pathway planning for end turns of the electrical machine 100. In addition, the strand 210 design (e.g., gap between strands, size) must be facilitated by the available manufacturing technique. Selecting a collection 205 of strands 210, at block 1030, may include a consideration of maintaining an equal cross sectional area for each strand 210 with a given turn or twist or maintaining cross sectional area within a predefined range for each strand 210. Several different embodiments of collections 205 of different numbers of strands 210 are shown in FIGs. 3-8. These are only some examples of possible groupings of strands 210. At block 1040, controlling a twist of the strands 210 to reduce AC winding loss may be done in one of the exemplary ways discussed above. As noted above, the exemplary embodiments shown in FIGs. 3-8 illustrate a particular degree of twist (e.g., 45 degrees, 90 degrees). However, those exemplary embodiments are not limited to any particular degree of twist. As illustrated in the figures discussed above, the cross sectional area of each strand 210 may be maintained while the shape of the cross section changes during a twist. A sub-collection 710 of strands 210 within a collection 205 of strands 210 may be twisted alternatively or additionally with the collection 205 (see e.g., FIG. 7). The grouping of strands 210 that are twisted may be interchanged (see e.g., FIG. 8).

While the invention has been described with reference to an exemplary embodiment or embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the claims.

## Claims

1. A component to generate a magnetic field, comprising:
a plurality of slots (115); and
a plurality of sets of strands, each of said sets of strands consisting of a plurality of strands (210), said sets forming windings, each set of strands being enclosed in a respective one of the plurality of slots, each set of strands being divided into a plurality of collections (205, 710) of strands configured to be twisted over a portion of a length of the respective one of the plurality of slots,
wherein each collection (205, 710) of strands is configured to change cross sectional shape over the portion; **characterized in that** within a set of strands, a non-prime number of the collections (205, 710) of strands are first twisted individually and then twisted all together.

2. The component according to claim 1, wherein each strand of a collection (205, 710) among the plurality of the collection of strands (210) changes cross sectional shape based on casting, additive manufacturing methods, extrusion, cold forming, or molding .

3. The component according to claim 1 or 2, wherein each strand (210) of a collection (205, 710) among the plurality of the collection of strands maintains a constant cross sectional area.

4. The component according to claim 1, 2 or 3, wherein each strand (210) of a collection among the plurality of the collection (205, 710) of strands maintains a cross sectional area within a defined range.

5. The component according to any preceding claim, wherein a cross sectional area of each of the plurality of slots is filled with a cross sectional area of strands (205) of the respective set of the plurality of strands.

6. A method of designing strand layout of windings, comprised of of sets of a plurality of strands, (210) within each slot of a component configured to generate a magnetic field, according to claim 1, each set of strands being divided into a plurality of collections (205, 710) of strands, the method comprising:
twisting two or more of the plurality of collections of strands over a portion of a length of the respective slot; and
changing the cross sectional shape of the two or more of the plurality of collections of strands over the portion of the length; **characterized by** obtaining a non-prime number of collections (205, 710) of strands among the plurality of strands, twisting the strands of each of the non-prime number of collections of strands and then twisting the strands of all of the non-prime number of collections of strands together.

7. The method according to claim 6, wherein the changing the cross sectional shape is based on casting, additive manufacturing methods, extrusion, cold forming, or injection molding.

8. The method according to claim 6 or 7, further comprising maintaining a constant cross sectional area over the length for the two or more of the plurality of strands.

9. The method according to claim 6, 7 or 8, further comprising maintaining a cross sectional area of the two or more of the plurality of strands to be within a defined range.

## Patentansprüche

1. Bauteil zum Erzeugen eines magnetischen Felds, das Folgendes umfasst:
eine Vielzahl von Schlitzen (115); und
eine Vielzahl von Strangsätzen, wobei jeder der Strangsätze aus einer Vielzahl von Strängen (210) besteht, wobei die Sätze Wicklungen bilden, wobei jeder Strangsatz in einem jeweiligen der Vielzahl von Schlitzen eingefügt ist, wobei jeder Strangsatz in eine Vielzahl von Sammlungen (205, 710) von Strängen eingeteilt ist, die dazu konfiguriert sind, über einem Abschnitt einer Länge des jeweiligen der Vielzahl von Schlitzen verdreht zu sein, wobei jede Sammlung (205, 710) von Strängen dazu konfiguriert ist, eine Querschnittsform über dem Abschnitt zu ändern; **dadurch gekennzeichnet, dass** innerhalb eines Strangsatzes eine nichtprimzahlige Anzahl der Sammlungen (205, 710) von Strängen zuerst individuell verdreht werden und danach alle gemeinsam verdreht werden.

2. Bauteil nach Anspruch 1, wobei jeder Strang einer Sammlung (205, 710) unter der Vielzahl der Sammlung von Strängen (210) eine Querschnittsform basierend auf einem Abformen, additiven Herstellungsverfahren, einem Strangpressen, einer Kaltumformung oder einem Gießen verändert.

3. Bauteil nach Anspruch 1 oder 2, wobei jeder Strang (210) einer Sammlung (205, 710) unter der Vielzahl der Sammlung von Strängen einen konstanten Querschnittsbereich beibehält.

4. Bauteil nach Anspruch 1, 2 oder 3, wobei jeder Strang (210) einer Sammlung unter der Vielzahl der Sammlung (205, 710) von Strängen einen Querschnittsbereich innerhalb einer definierten Spanne beibehält.

5. Bauteil nach einem der vorhergehenden Ansprüche, wobei ein Querschnittsbereich von jedem der Vielzahl von Schlitzen mit einem Querschnittsbereich von Strängen (205) des jeweiligen Satzes der Vielzahl von Strängen gefüllt ist.

6. Verfahren zur Gestaltung eines Stranglayouts von Wicklungen, das aus Sätzen einer Vielzahl von Strängen (210) innerhalb eines jeden Schlitzes eines Bauteils nach Anspruch 1 besteht, das dazu konfiguriert ist, ein magnetisches Feld zu erzeugen, wobei jeder Strangsatz in eine Vielzahl von Sammlungen (205, 710) von Strängen eingeteilt ist, wobei das Verfahren Folgendes umfasst:
Verdrehen von zwei oder mehreren der Vielzahl von Sammlungen von Strängen über einem Abschnitt einer Länge des jeweiligen Schlitzes; und
Ändern der Querschnittsform der zwei oder mehreren der Vielzahl von Sammlungen von Strängen über dem Abschnitt der Länge; **gekennzeichnet durch**
Erhalten einer nichtprimzahligen Anzahl von Sammlungen (205, 710) von Strängen unter der Vielzahl von Strängen, Verdrehen der Stränge von jeder der nichtprimzahligen Anzahl von Sammlungen von Strängen und danach gemeinsames Verdrehen der Stränge von allen der nichtprimzahligen Anzahl von Sammlungen von Strängen.

7. Verfahren nach Anspruch 6, wobei das Ändern der Querschnittsform auf einem Abformen, additiven Herstellungsverfahren, einem Strangpressen, einer Kaltumformung oder einem Spritzgießen basiert.

8. Verfahren nach Anspruch 6 oder 7, ferner umfassend ein Beibehalten eines konstanten Querschnittsbereichs über der Länge für die zwei oder mehreren der Vielzahl von Strängen.

9. Verfahren nach Anspruch 6, 7 oder 8, ferner umfassend ein Beibehalten eines Querschnittsbereichs der zwei oder mehreren der Vielzahl von Strängen innerhalb einer definierten Spanne.

## Revendications

1. Composant pour générer un champ magnétique, comprenant :
une pluralité de fentes (115) ; et
une pluralité d'ensembles de brins, chacun desdits ensembles de brins étant constitué d'une pluralité de brins (210), lesdits ensembles formant des enroulements, chaque ensemble de brins étant enfermé dans une fente respective de la pluralité de fentes, chaque ensemble de brins étant divisé en une pluralité de collections (205, 710) de brins configurées pour être torsadées sur une partie d'une longueur de la fente respective de la pluralité de fentes, dans lequel chaque collection (205, 710) de brins est configurée pour changer de forme en section transversale sur cette partie ; **caractérisé en ce que** dans un ensemble de brins, un nombre non premier des collections (205, 710) de brins sont tout d'abord torsadées individuellement et puis torsadées toutes ensemble.

2. Composant selon la revendication 1, dans lequel chaque brin d'une collection (205, 710) parmi la pluralité de la collection de brins (210) change de forme en section transversale sur la base d'un coulage, de procédés de fabrication additive, d'une extrusion, d'un formage à froid ou d'un moulage.

3. Composant selon la revendication 1 ou 2, dans lequel chaque brin (210) d'une collection (205, 710) parmi la pluralité de la collection de brins conserve une surface en section transversale constante.

4. Composant selon la revendication 1, 2 ou 3, dans lequel chaque brin (210) d'une collection parmi la pluralité de la collection (205, 710) de brins conserve une surface en section transversale dans une plage définie.

5. Composant selon l'une quelconque des revendications précédentes, dans lequel une surface en section transversale de chacune de la pluralité de fentes est remplie avec une surface en section transversale de brins (205) de l'ensemble respectif de la pluralité de brins.

6. Procédé de conception de disposition de brins d'enroulements, composés d'ensembles d'une pluralité de brins (210) dans chaque fente d'un composant configuré pour générer un champ magnétique selon la revendication 1, chaque ensemble de brins étant divisé en une pluralité de collections (205, 710) de brins,
le procédé comprenant :
la torsion de deux ou plusieurs de la pluralité de collections de brins sur une partie d'une longueur de la fente respective ; et
le changement de la forme en section transversale des deux collections ou plus de la pluralité de collections de brins sur la partie de la longueur ; **caractérisé par**
l'obtention d'un nombre non premier de collections (205, 710) de brins parmi la pluralité de brins, la torsion des brins de chacune du nombre nom premier de collections de brins et puis la torsion des brins de la totalité du nombre non premier de collections de brins ensemble.

7. Procédé selon la revendication 6, dans lequel le changement de la forme en section transversale est basé sur un coulage, des procédés de fabrication additive, une extrusion, un formage à froid ou un moulage par injection.

8. Procédé selon la revendication 6 ou 7, comprenant en outre le maintien d'une surface en section transversale constante sur la longueur pour les deux brins ou plus de la pluralité de brins.

9. Procédé selon la revendication 6, 7 ou 8, comprenant en outre le maintien d'une surface en section transversale des deux brins ou plus de la pluralité de brins dans une plage définie.
